# EUROPÄISCHE PATENTANMELDUNG

(11) **EP 4 249 145 A1**
(43) Veröffentlichungstag der Anmeldung: **27.09.2023**
(21) Anmeldenummer: 23155613.5
(22) Anmeldetag: 08.02.2023
(51) Int. Cl.: B21D 28/32, B30B 1/40, B21D 19/08

(54) **SCHIEBERANORDNUNG**

(30) Priorität: 21.03.2022 DE 102022106585
(71) Anmelder: Fibro GmbH, 74189 Weinsberg (DE)
(72) Erfinder: MEYER, Markus, 88239 Wangen im Allgäu (DE)
(74) Vertreter: Staeger & Sperling Partnerschaftsgesellschaft mbB

(57) **Zusammenfassung**

Die Erfindung betrifft ein Schieberanordnung (1) insbesondere ausgebildet als Keiltriebwerkzeug mit einem Schieberoberteil (10) und einem Schieberunterteil (20) welches aufgrund einer Relativbewegung zum Schieberoberteil (10) entlang von Führungen (30) von einer Ausgangsposition in eine Arbeitsposition und umgekehrt verschiebbar ist, wobei wenigsten eine Rückholeinrichtung (40) vorgesehen ist, um die Ausgangsposition des Schieberoberteil (10) und Schieberunterteil (20) zu bewirken, wobei die Rückholeinrichtung (40) endseitig eine Verschlussschraube (50) aufweist, um die Rückholeinrichtung (40) in einer Aufnahme (11) der Schieberanordnung (1) zu fixieren, dadurch gekennzeichnet, dass die Verschlussschraube (50) wenigstens zwei Verdrehsicherungsmittel (51) aufweist, die ausgebildet sind, ein Verdrehen der Verschlussschraube (50) über einen maximal zulässigen Verdrehwinkel α hinaus zu verhindern.

## Beschreibung

Die Erfindung betrifft eine Schieberanordnung gemäß dem Anspruch 1.

Aus dem Stand der Technik sind diverse Schieberanordnungen bekannt. Insbesondere sind Schieberanordnungen bekannt mit einem Schieber, einem den Schieber in gleitender Verbindung tragenden Schieberträger und mindestens einem Treiber, wobei der Schieber aufgrund einer Relativbewegung zwischen dem Schieberträger und dem Treiber, unter Kontakt mit dem Treiber, entlang von Führungen des Schieberträgers und des Treibers, von einer Ausgangsposition in eine Arbeitsposition und umgekehrt verschiebbar ist.

Als Federelement zum Bewegen des Schiebers in die Ausgangsposition wird beispielsweise eine Gasdruckfeder verwendet.

Schieberanordnungen der gattungsbildenden Art sind aus der Praxis bekannt. Die gattungsbildenden Schieberanordnungen dienen zur Kraftübertragung gegenüber einem Werkzeug, beispielsweise zum Stanzen, Schneiden, Umformen, Teilen, etc. Regelmäßig wird der zur Bearbeitung erforderliche Druck über eine Presse aufgebracht, die unter Zwischenschaltung der Schieberanordnung gegenüber einer Basis bzw. einem Maschinengestell wirkt. Die Bewegungsrichtung eines Pressstempels wird durch die ganz besondere Schieberanordnung auf eine Bewegungsrichtung des Schiebers transformiert, die regelmäßig unter einem spitzen Winkel zu einem Schieberträger verläuft.

Bei einer bekannten Schieberanordnung wird der Schieberträger über eine Presse mit einer Kraft beaufschlagt, die zwischen dem Schieberträger und einem sich auf einer Basis bzw. einem Untergestellt abstützenden Treiber wirkt. Durch Entlasten und Rückholen des Schieberträgers wird der Schieber von der Arbeitsposition in die Ausgangsposition zurückgezogen, und zwar ebenfalls wieder entlang der Führungen von Treiber und Schieberträger.

Bei der bekannten Schieberanordnung ist nachteilig, dass es im Betrieb zu Störungen oder Problemen kommen kann, wenn die Fixierung der Gasdruckfeder nicht dauerhaft gewährleistet ist. Eine etwaig vorhandene Verschlussschraube kann sich zum Beispiel im Betrieb aufgrund von Erschütterungen und Vibrationen ungewollt herausdrehen. Andererseits lassen sich bekannte Lösungen zur Vermeidung dieses Problems nicht ohne weiteres auf eine Schieberanordnung (Keilschieber oder Keiltriebwerk) übertragen, da einerseits die Montage, andererseits die Betriebssicherheit und auch eine etwaige Demontage und Remontage zu Wartungszwecken gegeben sein muss. Insofern handelt es sich nicht um einen einmal herzustellenden Dauerzustand, sondern um einen Zustand, der nach jeder Wartung und auch dem Ersteinbau sicher und reproduzierbar herstellbar sein muss und gleichzeitig kostengünstig realisierbar ist. Insbesondere ist es wünschenswert auch eine Lösung zu finden, die bei bereits vorhandenen Schieberlösungen einsetzbar ist, ohne dass diese Schieber kostenintensiv verändert werden müssten.

Der Erfindung liegt deshalb die Aufgabe zugrunde, die aus dem Stand der Technik bekannten Nachteile zu überwinden und eine verbesserte, kostengünstig zu realisierende Lösung für eine Schieberanordnung vorzusehen.

Diese Aufgabe wird durch die Merkmalskombination gemäß Patentanspruch 1 gelöst.

Erfindungsgemäß wird daher eine Schieberanordnung, insbesondere ausgebildet als Keiltriebwerkzeug mit einem Schieberoberteil und einem Schieberunterteil vorgeschlagen, welches aufgrund einer Relativbewegung zum Schieberoberteil entlang von Führungen von einer Ausgangsposition in eine Arbeitsposition und umgekehrt verschiebbar ist, wobei wenigsten eine Rückholeinrichtung vorgesehen ist, um die Ausgangsposition des Schieberoberteil und Schieberunterteil zu bewirken, wobei die Rückholeinrichtung endseitig eine Verschlussschraube aufweist, um die Rückholeinrichtung in einer Aufnahme der Schieberanordnung zu fixieren, wobei die Verschlussschraube wenigstens zwei (vorzugsweise mehrere) Verdrehsicherungsmittel aufweist, die ausgebildet sind, ein Verdrehen der Verschlussschraube über einen maximal zulässigen Verdrehwinkel α hinaus zu verhindern.

Besonders bevorzugt ist es, wenn die Rückholeinrichtung eine in der Schieberanordnung gelagerte Gasdruckfeder ist.

Weiter kann vorteilhaft vorgesehen sein, dass an der Schieberanordnung wenigsten zwei Montagepositionen M1, M2 für je ein gleichartiges und wieder lösbares Fixiermittel vorgesehen sind, wobei sich bei Montage eines der Fixiermittel zumindest eines der an der Verschlussschraube vorstehenden Verdrehsicherungsmittel das Verdrehen der Verschlussschraube über einen maximal zulässigen Verdrehwinkel α hinaus verhindert.

Alternativ oder zusätzlich dazu kann die Verschlussschraube mehrere am Umfang des Schraubenkopfes angeordnete Verdrehsicherungsmittel aufweisen, vorzugsweise angeordnet in einem äquidistanten Abstand in Umfangsrichtung betrachtet. Somit könne gleichverteilt über den Umfang z. B. 5 gleichartige Verdrehsicherungsmittel hervorstehen.

Eine ebenfalls vorteilhafte Weiterbildung der Schieberanordnung sieht vor, dass der Verschlussschraubenkopf der Verschlussschraube im Querschnitt betrachtet unrund ist und eine gewellte Außenkontur ausbildet. Die gewellte Außenkontur kann durch Ausfräsen einer runden Ausgangskontur gebildet werden, wodurch "Täler" und "Berge" entlang des Umfangs erzeugt werden.

Insbesondere kann hierzu vorgesehen sein, dass sich die mehreren Verdrehsicherungsmittel dabei quer zur Schraubenachse radial nach außen, somit quer vom Schraubenkopf weg erstrecken.

Die Verdrehsicherungsmittel können insbesondere als Kuppen, Nasen, Vorsprünge oder Buckel am Schraubenkopf vorgesehen sind

Weiter von Vorteil ist eine Ausführungsform, bei der die beiden Montagepositionen M1, M2 für ein Fixiermittel so an der Schieberanordnung positioniert bzw. vorgesehen sind, dass sich nur ein Fixiermittel jeweils nur an einer der beiden Montagepositionen montieren lässt und insbesondere eine Montage des Fixiermittels an der jeweils anderen Position dann durch die Lage eines der Verdrehsicherungsmittel verhindert wird. Dies wird bevorzugt dadurch erreicht, dass das betreffende Verdrehsicherungsmittel in den Montageraum für das Fixiermittel an dieser Position hineinragt, und somit eine Montage blockiert.

Mit Vorteil kann die Verdrehsicherung dadurch realisiert werden, dass das Fixiermittel eine solche Form oder eine vorstehende Nase besitzt, mit der sich das Fixiermittel in den Bereich innerhalb der Hüllkontur des Schraubenkopfs hinein erstreckt, vorzugsweise in einen Bereich der Hüllkurve bzw. Hüllkontur, der zwischen zwei Verdrehsicherungsmittel liegt. Das Fixiermittel kann dabei auch zweiteilig ausgebildet sein, bevorzugt ist eine einteilige und einstückige Lösung.

Weiter bevorzugt ist es, wenn das jeweils montierte Fixiermittel eine runde Querschnittsform aufweist mit der sich das Fixiermittel zumindest teilweise in den Bereich innerhalb der Hüllkontur des Schraubenkopfs hinein erstreckt. Bei einer geringen Drehung der Verschlussschraube blockieren dann die Fixiermittel die hervorstehenden Verdrehsicherungsmittel und eine weitere Drehbewegung der Verschlussschraube wird sicher verhindert.

In einer bevorzugten Ausgestaltung der Erfindung kann weiter vorgesehen sein, dass der Schraubenkopf der Verschlussschraube und/oder des Fixiermittels innenliegend eine Eingriffskontur für ein Werkzeug aufweist, vorzugsweise eine Ausnehmung für einen Innenimbus.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine isometrische Ansicht eines beispielhaften Keiltriebwerkzeugs mit einem Schieberoberteil und einem Schieberunterteil;
- Fig. 2: eine isometrische Ansicht eines Teils des Keiltriebwerkzeugs aus Figur 1 ;
- Fig. 3: eine isometrische Ansicht eines Teils eines Keiltriebwerkzeugs mit einer partiellen Teilschnittansicht im Bereich der Rückholeinrichtung;
- Fig. 4: eine Schnittansicht durch ein Keiltriebwerkzeug;
- Fig. 5: eine Ansicht auf ein erstes Ausführungsbeispiel der Realisierung einer Verdrehsicherung;
- Fig. 6: eine Ansicht auf das Ausführungsbeispiel gemäß Figur 5 in einer anderen Drehstellung;
- Fig. 7: eine Ansicht auf ein alternatives Ausführungsbeispiel der Realisierung einer Verdrehsicherung;
- Fig. 8: eine Ansicht auf das Ausführungsbeispiel gemäß Figur 7 in einer anderen Drehstellung.

Die Figuren sind beispielhaft schematisch. Gleiche Bezugszeichen in den Figuren weisen auf gleiche funktionale und/oder strukturelle Merkmale hin.

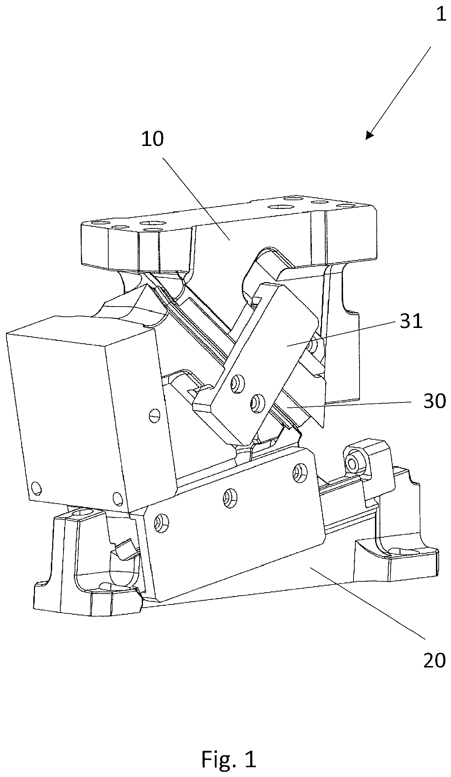

In Figur 1 ist eine isometrische Ansicht eines beispielhaften Keiltriebwerkzeugs 1, allgemein einer Schieberanordnung 1. Diese Schieberanordnung 1 besitzt ein Schieberoberteil 10 und ein Schieberunterteil 20 welches aufgrund einer Relativbewegung zum Schieberoberteil 10 entlang von Führungen 30 von einer Ausgangsposition in eine Arbeitsposition und umgekehrt verschiebbar ist.

Die Klammer 31 hält die Bauteile in der Führung 30. Dies könnte aber auch anders realisiert sein und ist für die vorliegende Erfindung nicht erfindungsrelevant.

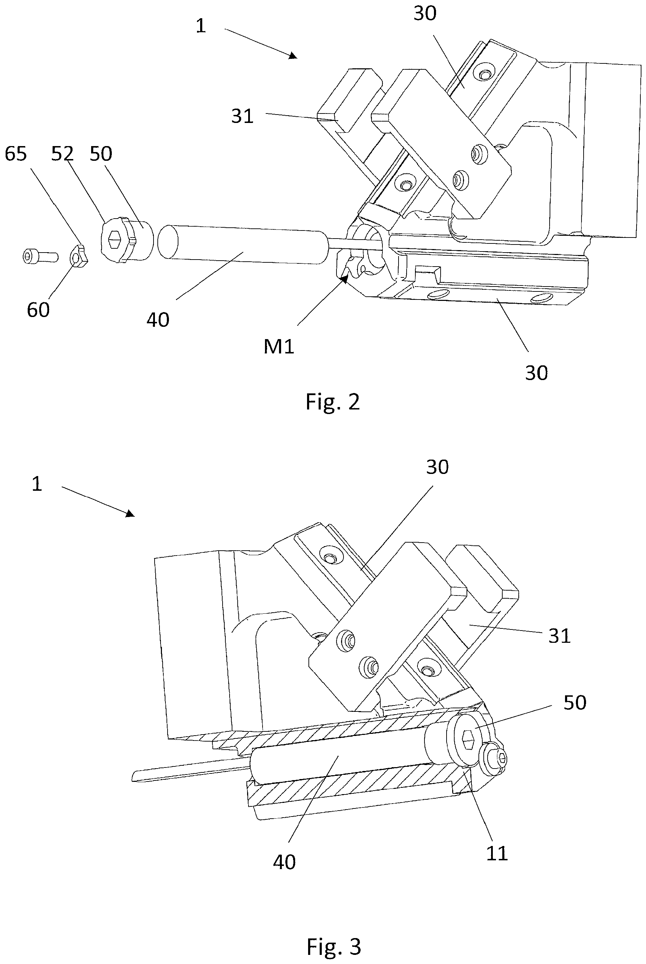

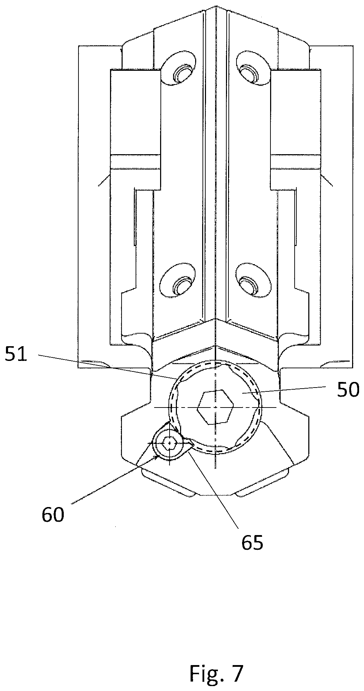

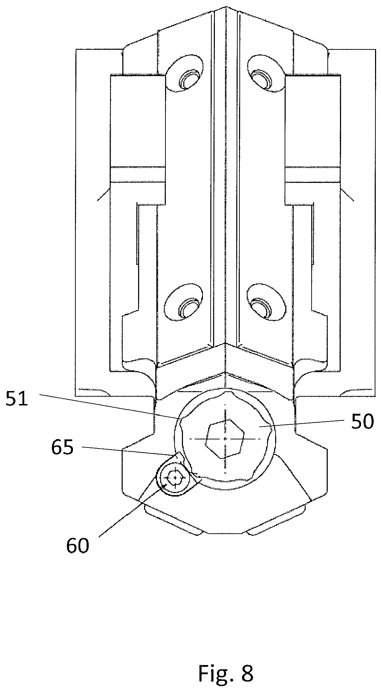

In der Figur 2 ist eine isometrische Ansicht eines Teils des Keiltriebwerkzeugs 1 aus Figur 1 gezeigt, wobei die Rückholeinrichtung 40 in einer nicht montierten Position zum besseren Verständnis der Erfindung gezeigt ist. In dieser Abbildung ist ein Fixiermittel 60 dargestellt, wie es bei der Lösung gemäß den Ausführungsbeispielen nach Figur 7 und 8 zum Einsatz kommt. Für eine solche Ausführung wird nur eine einzige Montageposition M1 für das Fixiermittel 60 vorgesehen. Je nachdem in welcher finalen Drehposition die Verschlussschraube 50 in ihrer Montageposition montiert ist, kann das gezeigte Fixiermittel 60 nur in einer bestimmten Orientierung montiert werden, bei der die Nase 65 des Fixiermittels entweder unterhalb oder oberhalb der Nase 51 der Verschlussschraube 50 positioniert ist. Diese beiden Montagepositionen des Fixiermittels 60 sind in den Figuren 7 und 8 gezeigt. Ebenso die entsprechende Drehstellung der Verschlussschraube 50. Die vorstehende Nase 65 des Fixiermittels 60 erstreckt sich jeweils in den Bereich innerhalb der dargestellten gestrichelten Hüllkontur des Schraubenkopfs 52 hinein. Beim Drehen an der Verschlussschraube 50 wird diese durch die Nase 65 blockiert.

In der Figur 3 findet sich eine isometrische Ansicht des Teils des Keiltriebwerkzeugs 1 nach einer konventionellen Lösung mit einer partiellen Teilschnittansicht im Bereich der Rückholeinrichtung 40. Die Verschlussschraube wird durch eine Scheibe am Herausdrehen gesichert. Diese Sicherung ist nicht formschlüssig, die Kraft wirkt (zyklisch) axial auf die Sicherungsschraube.

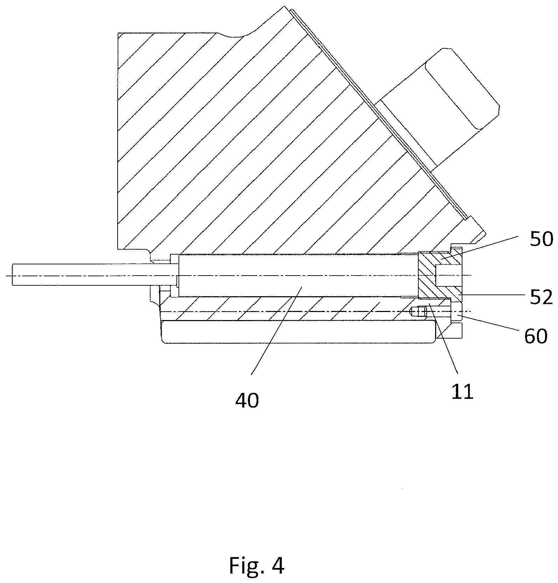

Die Rückholeinrichtung 40 ist ausgebildet, um die Ausgangsposition des Schieberoberteil 10 und Schieberunterteil 20 im Werkzeug zu bewirken. Weiter ist zu erkennen, dass die Rückholeinrichtung 40 endseitig die besagte Verschlussschraube 50 aufweist, um die Rückholeinrichtung 40 in einer Aufnahme 11 der Schieberanordnung 1 zu fixieren, was deutlicher in der Ansicht der Figur 4 zu erkennen ist. Zur Begrenzung des Verdrehwinkels α der Verschlussschraube 50 wirkt diese mit dem ebenfalls gezeigten Fixiermittel 60 zusammen.

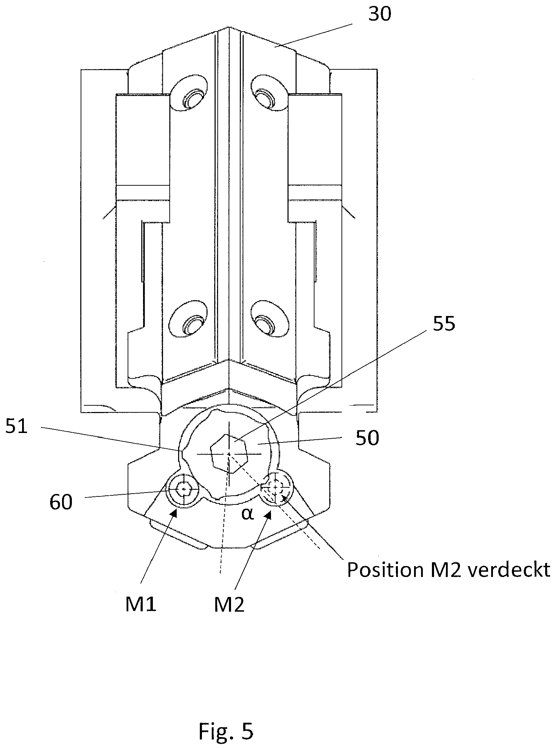

In den Figuren 5 bis 8 sind Ausführungsbeispiele der Realisierung der Verdrehsicherung gezeigt. Zu sehen ist jeweils die stirnseitige Ansicht auf den Bereich mit der Verschlussschraube 50. Hierzu weist die Verschlussschraube 50 in den gezeigten Beispielen jeweils 5 Verdrehsicherungsmittel 51 in Form von Nasen auf, die sich radial nach Außen, somit quer zur Betätigungsrichtung der Rückholeinrichtung 40 erstrecken. Denkbar ist auch eine andere Anzahl der Nasen 51.

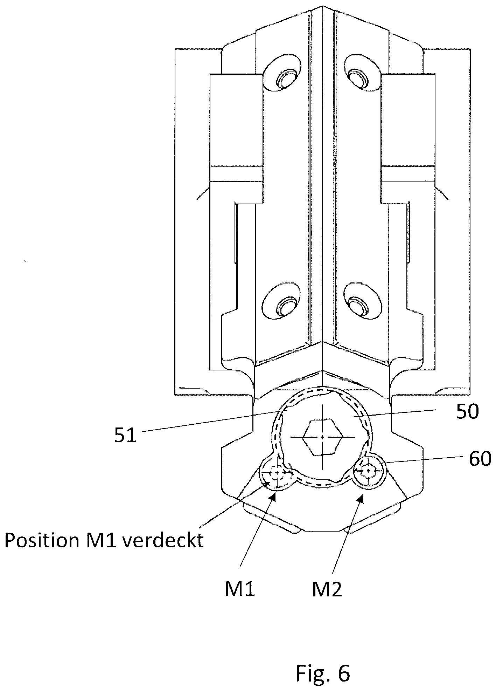

Für die Montage des Fixiermittels 60 sind bei der Ausführung nach den Figuren 5 und 6 zwei alternative Montagepositionen M1, M2 vorgesehen, wobei je nach Winkelstellung der Verschlussschraube 50, nur eine Montage an einer der beiden Montagepositionen M1, M2 möglich ist, während die jeweils andere Montageposition durch eine Nase 51 oder einen Vorsprung des Verdrehsicherungsmittels 51 blockiert bzw. teilweise verdeckt ist. Diese beiden Montagemöglichkeiten sind für das Ausführungsbeispiel in den Figuren 5 und 6 gezeigt.

Die gezeigten Verdrehsicherungsmittel 51 sind am Schraubenkopf 52 vorgesehen. Bei allen Ausführungsvarianten wird das Verdrehen der Verschlussschraube 50 über einen maximal zulässigen Verdrehwinkel α hinaus verhindert (angedeutet durch die beiden gestrichelten Linien in der Figur 5 und dem dazwischenliegenden Winkel α). Sofern die Verdrehsicherungsmittel 51 in einem äquidistanten Abstand in Umfangsrichtung betrachtet, angeordnet sind, ist der maximal zulässigen Verdrehwinkel α bezogen auf die Positionen der Verdrehsicherungsmittel 51 immer gleich groß, wobei je nach Winkelstellung der Verschlussschraube 50 der tatsächlich mögliche Drehwinkel auch kleiner ausfallen kann.

## Patentansprüche

1. Schieberanordnung (1) insbesondere ausgebildet als Keiltriebwerkzeug mit einem Schieberoberteil (10) und einem Schieberunterteil (20) welches aufgrund einer Relativbewegung zum Schieberoberteil (10) entlang von Führungen (30) von einer Ausgangsposition in eine Arbeitsposition und umgekehrt verschiebbar ist, wobei wenigsten eine Rückholeinrichtung (40) vorgesehen ist, um die Ausgangsposition des Schieberoberteil (10) und Schieberunterteil (20) zu bewirken, wobei die Rückholeinrichtung (40) endseitig eine Verschlussschraube (50) aufweist, um die Rückholeinrichtung (40) in einer Aufnahme (11) der Schieberanordnung (1) zu fixieren, **dadurch gekennzeichnet, dass** die Verschlussschraube (50) wenigstens zwei Verdrehsicherungsmittel (51) aufweist, die ausgebildet sind, ein Verdrehen der Verschlussschraube (50) über einen maximal zulässigen Verdrehwinkel α hinaus zu verhindern, vorzugsweise mittels Formschluss an einem Fixiermittel (60).

2. Schieberanordnung (1) nach Anspruch 1,
wobei an der Schieberanordnung (1) wenigsten zwei Montagepositionen (M1, M2) oder Montagevarianten für je ein gleichartiges und wieder lösbares Fixiermittel (60) vorgesehen sind, wobei sich bei Montage eines der Fixiermittel (60) zumindest eines der Verdrehsicherungsmittel (51) an der Verschlussschraube (50) das Verdrehen der Verschlussschraube (50) über einen maximal zulässigen Verdrehwinkel α hinaus verhindert.

3. Schieberanordnung (1) nach Anspruch 1 oder 2,
wobei die Verschlussschraube (50) mehrere am Umfang des Schraubenkopfes (52) angeordnete Verdrehsicherungsmittel (51) aufweist, vorzugsweise angeordnet in einem äquidistanten Abstand in Umfangsrichtung betrachtet.

4. Schieberanordnung (1) nach einem der vorhergehenden Ansprüche,
wobei der Verschlussschraubenkopf (52) der Verschlussschraube im Querschnitt betrachtet unrund ist und eine gewellte Außenkontur ausbildet.

5. Schieberanordnung (1) nach dem vorhergehenden Anspruch,
wobei sich die mehreren Verdrehsicherungsmittel (51) quer zur Schraubenachse radial nach außen, somit quer vom Schraubenkopf (52) weg erstrecken.

6. Schieberanordnung (1) nach einem der vorhergehenden Ansprüche,
wobei die Verdrehsicherungsmittel (51) als Kuppen, Nasen, Vorsprünge oder Buckel am Schraubenkopf (52) vorgesehen sind.

7. Schieberanordnung (1) nach einem der vorhergehenden Ansprüche 2 bis 6, wobei die beiden Montagepositionen (M1, M2) für ein Fixiermittel (60) so an der Schieberanordnung (1) vorgesehen sind, dass sich das Fixiermittel (60) jeweils nur an einer der beiden Montagepositionen (M1, M2) montieren lässt und insbesondere eine Montage des Fixiermittels (60) durch die Lage eines der Verdrehsicherungsmittel (51) verhindert wird.

8. Schieberanordnung (1) nach einem der vorhergehenden Ansprüche,
wobei das jeweils montierte Fixiermittel (60) eine solche Form oder eine vorstehende Nase (65) besitzt, mit der sich das Fixiermittel (60) in den Bereich innerhalb der Hüllkontur des Schraubenkopfs (52) hinein erstreckt.

9. Schieberanordnung (1) nach einem der vorhergehenden Ansprüche,
wobei das jeweils montierte Fixiermittel (60) eine runde Querschnittsform aufweist mit der sich das Fixiermittel (60) zumindest teilweise in den Bereich innerhalb der Hüllkontur des Schraubenkopfs (52) hinein erstreckt.

10. Schieberanordnung (1) nach einem der vorhergehenden Ansprüche, **dadurch gekennzeichnet, dass** der Schraubenkopf (52) innenliegend eine Eingriffskontur (55) für ein Werkzeug aufweist, vorzugsweise eine Ausnehmung (55) für einen Innensechskant oder Innenhalbrund.
